# EUROPÄISCHE PATENTSCHRIFT

(11) **EP 1 952 006 B1**
(45) Veröffentlichungstag und Bekanntmachung des Hinweises auf die Patenterteilung: **03.03.2010**
(21) Anmeldenummer: 06777127.9
(22) Anmeldetag: 31.08.2006
(51) Int. Cl.: F02M 25/022

(54) **VORRICHTUNG ZUR HERSTELLUNG EINER DIESELÖL-WASSER-MIKRO- EMULSION UND ZUR EINSPRITZUNG DIESER EMULSION IN EINEN DIESELMOTOR**
DEVICE FOR PRODUCING A DIESEL FUEL-WATER MICROEMULSION AND INJECTING SAID EMULSION INTO A DIESEL ENGINE
DISPOSITIF POUR PRODUIRE UNE MICRO-EMULSION D'EAU ET DE GAZOLE ET POUR INJECTER CETTE EMULSION DANS UN MOTEUR DIESEL

(30) Priorität: 15.09.2005 DE 102005044046
(43) Veröffentlichungstag der Anmeldung: 06.08.2008
(73) Patentinhaber: Verstallen, Adrian, 44339 Dortmund (DE)
(72) Erfinder: Verstallen, Adrian, 44339 Dortmund (DE)
(86) Internationale Anmeldenummer: PCT/EP2006/008496
(87) Internationale Veröffentlichungsnummer: WO 2007/031196

(56) Entgegenhaltungen:
- EP-A1- 0 742 363
- EP-A1- 0 780 558
- US-A1- 2005 126 513

## Beschreibung

Die Erfindung betrifft eine Vorrichtung zur Herstellung einer Dieselöl-Wasser-Mikroemulsion und zur Einspritzung dieser Emulsion in einen Dieselmotor.

Dieselöl-Wassergemische sind erprobte Brennstoffe zum Antrieb von Dieselmotoren. Dabei hat sich gezeigt, dass mit solch einer Emulsion als Brennstoff eine viel saubere Verbrennung als mit reinem Dieselöl erzielt wird. In Abhängigkeit vorn Wasseranteil der Emulsion können die Schadstoffe wie Feinstaub, Russpartikel und NOx in den Abgasen auf minimale Werte reduziert werden. Nachteilig ist jedoch, dass die Dieselöl-Wasser-Emulsionen nicht sehr stabil sind. Nach kurzer Standzeit werden die beiden Phasen getrennt, wenn sie nicht durch ein Additiv, einen so genannten Emulator, stabil gehalten werden.

Für eine weit verbreitete Anwendung einer Dieselöl-Wasser Emulsion als Brennstoff müssten stabile Emulsionen in großen Anlagen mit dem Zusatz von Emulgatoren vorgefertigt werden und in großen Tankanlagen gespeichert werden. Außerdem müssten die Tankstellen mit zusätzlichen Befüllungseinrichtungen ausgestattet werden. Der Investitionsaufwand dafür wäre enorm und unter den gegebenen wirtschaftlichen Verhältnissen nicht durchführbar.

Aus DE 696 03 823 T2 ist eine Flüssig-Brennstoff-Zufuhrvorrichtung für eine Dieselbrennkraftmaschine bekannt, welche einen Mischer aufweist, dem Brennstoff und Wasser zugeführt wird, wobei das so gebildete Brennstoff-Wasser-Gemisch anschließend zu den Einspritzpumpen des Motors gelangt. Diese Vorrichtung kann zwar direkt in ein Kraftfahrzeug eingebaut werden, eine stabile Dieselöl-Wasser-Emulsion lässt sich mit ein solchen Vorrichtung jedoch nicht erreichen.

Aus DD 228 594 A1 ist ein Kraftstoff-System für zwei nicht mischbare Kraftstoffe bekannt, wobei es sich z.B. um Dieselkraftstoff und einen Alkohol handeln kann. Die Kraftstoffe sind in zwei getrennten Kraftstoffbehältern aufgenommen und werden zur Mischung und Dosierung einer Misch- und Dosierpumpe zugeführt und gelangen von dort zur Kraftstoffförderpumpe.

Aus DE 199 48 464 A1 ist ein Common-Rail-Kraftstoffeinspritzsystem für Brennkraftmaschinen bekannt, welches einen Kraftstoffhochdruckspeicher zur Versorgung mehrerer Injektoren aufweist, die dazu dienen, Kraftstoff in den Brennraum der Brennkraftmaschine einzuspritzen. Dabei ist der Kraftstoffhochdruckspeicher über eine hydraulische Übersetzungseinrichtung mit einem Niederdruckspeicher hydraulisch gekoppelt.

Aufgabe der Erfindung ist es, eine Lösung zu schaffen, mit der eine Dieselöl-Wasser-Emulsion im Kraftfahrzeug selbst für den Dieselmotor zur Verfügung gestellt werden kann.

Diese Aufgabe wird mit einer Vorrichtung der eingangs bezeichneten Art gelöst, welche drei Hochdruckzylinder aufweist, wobei die Eingänge des ersten und des zweiten Hochdruckzylinders mit einer Wasser/Dieselöl Rohemulsionsmischanlage und die Ausgänge des ersten und des zweiten Hochdruckzylinders mit dem Homogenisierventil und der Eingang des dritten Hochdruckzylinders mit dem Ausgang des Homogenisierventils und der Ausgang des dritten Hochdruckzylinders mit dem Dieselmotor verbunden sind, wobei die drei Kolben der drei Hochdruckzylinder Bestandteil eines Druckübersetzers sind, dessen Antriebskolben in einem mit einem hydraulischen Antriebsaggregat verbundenen Antriebszylinder geführt ist.

Mit der erfindungsgemäßen Vorrichtung ist es möglich, eine Dieselöl-Wasser-Emulsion in einem Kraftfahrzeug selber bereitzustellen. Dabei wird neben der Vorrichtung nur ein kleiner Zusatztank für Wasser mit einer Dosierpumpe erforderlich, welche das Wasser dichteabhängig geregelt in die Dielölzulaufleitung zwischen Dieselöltank und der Vorrichtung dosiert, wobei die beiden Flüssigkeiten in einem statischen Mischer in der Zulaufleitung zu einer Wasser/Dieselöl Rohemulsion gemischt werden.

Hochdruckhomogenisieren (Drücke in der Größenordnung von 2.000 bar) kann kurz als homogenes Mischen zweier Flüssigkeiten durch Druckentspannung bezeichnet werden. Die Druckentspannung erfolgt, indem aus den beiden Flüssigkeiten vorab eine Roh-Emulsion herstellt und diese bei hohem Druck durch einen engen Spalt drückt, wodurch die Druckenergie in Strömungsenergie umgewandelt wird. Durch Scherung und Kavitation entstehen sehr kleine Tröpfchen, deren Größen bei hohen Homogenisierdrücken im Nm-Bereich liegen. Die engen Spalte können durch Ventile gebildet werden oder sie sind in den entsprechenden Düsen angeordnet. Die gebildeten Mischungen der nm-großen Tröpfchen beider Flüssigkeiten bezeichnet man als Mikroemulsionen. Mikroemulsionen besitzen insgesamt größere Tröpfchenoberflächen und sind reaktionsfreudiger und gewährleisten somit eine effiziente Verbrennung.

Zur Realisierung der erforderlichen hohen Drücke wird lediglich ein einfacher Druckübersetzer benötigt, bei dem mit Einem hydraulischen Antriebszylinder mit großem Kolbendurchmesser drei Kolben kleineren Durchmessers in Hochdruckzylindern- gleichzeitig synchron linear angetrieben werden, wobei im ersten" Hochdruckzylinder und im zweiten Hochdruckzylinder eine vorab hergestellte Wasser/Dieselöl Rohemulsion in etwa gleichen Mengen zum Homogenisierventil gepumpt wird. Der dritte Zylinder stellt die Einspritzpumpe dar, mit der die gebildete Dieselöl-Wasser-Emulsion zum Hochdruckverteiler des Dieselmotors gefördert wird.

In ganz besonders bevorzugter Ausgestaltung ist vorgesehen, dass die drei Hochdruckzylinder in einer Reihe hintereinander angeordnet sind und zusammen mit dem Antriebszylinder eine gemeinsame ein- oder mehrteilige Kolbenstange aufweisen. Alle Zylinder der Vorrichtung sind somit in einer Reihe bzw. Linie angeordnet. Sie werden synchron gehoben und gesenkt. Dadurch ist es ggf. sogar möglich, auf Kolbendichtungen verzichten zu können, wenn die Spiele zwischen Kolben und Zylindern eng genug sind und die Drücke von einem Zylinder zum nächsten geringfügig reduziert werden. Dabei sind kleine Leckagen von einem Zylinder zum anderen akzeptabel, da eine Vermischung der Flüssigkeiten unkritisch ist, da ja ohnehin eine Mischung gebildet werden soll.

Alternativ kann auch vorgesehen sein, dass die drei Hochdruckzylinder parallel nebeneinander angeordnet sind. Der Druckübersetzer weist dann eine Art Platte auf! An der ein an einer Seite die drei parallelen Kolbenstangen der drei Hochdruckzylinder und an der anderen Seite die Kolbenstange des Antriebszylinders angeordnet sind.

Um auf besonders einfache Weise den benötigten Hochdruck von ca. 2.000 bar in den drei Hochdruckzylindern bereitstellen zu können, ist vorgesehen, dass der Querschnitt des Antriebskolbens wesentlich größer als die Summe der Querschnitte der Kolben der drei Hochdruckzylinder ist. So können die drei Hochdruckzylinder beispielsweise Kolbendurchmesser *von 12,6; 17,8 und 21,8,mm* haben, während der Antriebskolben einen Durchmesser von 70 mm aufweist. Das Verhältnis der Kolbenflächen bzw. der Ringflächen zwischen dem treibenden und den angetriebenen Kolben beträgt dann etwa *1:8,0*. Vom hydraulischen Antriebsaggregat ist dann lediglich ein Druck von etwa *250* bar bereitzustellen, um in den drei

Hochdruckzylindern die erforderlichen Drücke von etwa 2.000 bar zu erzielen.

In weiterer Ausgestaltung ist vorgesehen, dass zwischen dem Ausgang des Homogenisierventils und dem Eingang des dritten Hochdruckzylinders ein erster Pufferspeicher angeordnet ist. Dieser Pufferspeicher dient zur Pufferung der im Homogenisierventil erstellten Emulsion und soll etwaige Druckschwankungen ausgleichen.

Ferner ist ein mit dem Ausgang des dritten Hochdruckzylinders verbundener zweiter Pufferspeicher vorgesehen, der zur Pufferung der auf Hochdruck von ca. 2.000 bar gebrachter Emulsion auf dem Weg von der Einspritzpumpe (dritter Hochdruckzylinder) zum Motorverteiler dient und Druckschwankungen des Systems ausgleicht.

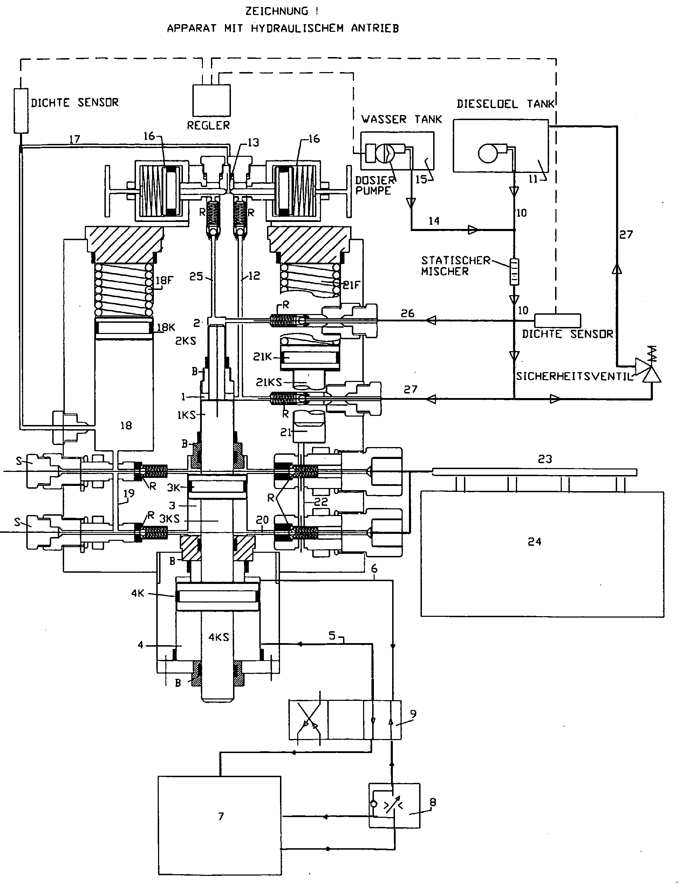

Die Steuerung des Antriebskolbens erfolgt vorzugsweise über den Massenstrom des Hydrauliköls des hydraulischen Antriebsaggregates zum Antriebszylinder mittels eines Regelventils durch das Gaspedal des Dieselmotors, wie auf Zeichnung 1 dargestellt

Zum Antreiben des Hydraulikaggregates ist bevorzugt vorgesehen, dass das hydraulische Antriebsaggregat ein Drehmomentübertragungselement zur Verbindung mit der Kurbelwelle eines Kraftfahrzeuges aufweist. Ein eigener Antrieb für das Hydraulikaggregat ist dann entbehrlich.

Alternative zum Hydraulikantrieb, der aus dem beschriebenen Antriebszylinder mit Antriebskolben und dem Hydraulikaggregat besteht, kann als ein ebenso bevorzugter Antrieb der Stufenkolben durch ein Nockengetriebe angetrieben werden. Das Nockengetriebe wird über einen stufenlos verstellbaren Riemenantrieb, (hier nicht dargestellt) mit der Kurbelwelle des Kraftfahrzeuges oder mit einem elektrischen Motor verbunden

Die Hubgeschwindigkeit des Stufenkolbens wird durch Verstellung des Stufengetriebes erreicht. Die Verstellung des Stufengetriebes erfolgt hydraulisch durch Betätigung des Gaspedals des Kraftfahrzeuges.

In weiterer besonders vorteilhafter Ausgestaltung ist vorgesehen, dass das Homogenisierventil als Gegenstromventil ausgebildet ist. Die beiden Rohemulsionsströme, von den Hydraulikzylindern 1 und 2 gefördert, werden dabei im Gegenstrom vermischt und homogenisiert. Jede Ventilseite besteht vorzugsweise aus einer Spindel mit einem konischen Ventilkegel, die beide in einen mittigen zylindrischen Sitz mit scharfer Kante eingeführt werden.

Die Spindelverstellung wird hydraulisch vorgenommen. Der Sitz wird in den Block eingeschrumpft. Die Spindeln sind in offenen Kanälen geführt, die mit hydraulischen Zylindern verbunden sind. Die Kolben der hydraulischen Verstellzylinder sind mit den Spindeln des Ventils verbunden und drücken mit Federn die Spindeln mit den Kegeln in die zylindrische Bohrung des Sitzes. Der vom Druckverstärker aufgebaute Druck presst gegen die Unterseite des Kolbens, der gegen die vorgespannte Feder drückt. Dabei wird der Kegel vom Ventilsitz um soviel gehoben, um stets mit gleichem Druck unabhängig vom Massenstrom zu homogenisieren. Über den engen Spalt zwischen den Ventilkegeln und der Kante des Sitzes fließen die beiden Flüssigkeiten mit hohen Geschwindigkeiten schichtförmig gegeneinander. Der Druck wird von 2.000 bar rapide auf etwa 100 bar abgebaut und die durch Scherung und Kavitation reduzierten Flüssigkeitströpfchen vermischen sich bei hoher Turbulenz.

Um die Baugröße der Vorrichtung möglichst zu miniaturisieren, ist ganz besonders bevorzugt vorgesehen, dass die drei Hochdruckzylinder, der Antriebszylinder und/oder die beiden Pufferspeicher als Bohrungen in einem gemeinsamen Gehäuse-block ausgebildet sind.

Die Erfindung ist nachstehend anhand der Zeichnung beispielhaft näher erläutert. Diese zeigt in der einzigen Figur eine Prinzipdarstellung einer erfindungsgemäßen Vorrichtung.

Eine erfindungsgemäße Vorrichtung zur Herstellung einer Dieselöl-Wasser-Mikroemulsion und zur Einspritzung dieser Emulsion in einen Dieselmotor weist zunächst drei Hochdruckzylinder auf, nämlich einen ersten Hochdruckzylinder 1 und einen zweiten Hochdruckzylinder 2 für die Wasser/Dieselöl-Rohemulsion und einen dritten Hochdruckzylinder 3 für eine Wasser/Dieselöl-Mikroemulsion. Ferner ist ein doppelt wirkender Antriebszylinder 4 vorgesehen.

Bei der dargestellten besonders bevorzugten Ausgestaltung sind die drei Hochdruckzylinder I, 2, 3 und der Antriebszylinder 4 in einer Reihe hintereinander angeordnet und als Druckübersetzer ausgebildet. Dazu weisen bei der dargestellten Ausgestaltung alle drei Hochdruckzylinder 1, 2, 3 und der Antriebszylinder 4 eine gemeinsame ein- oder mehrteilige Kolbenstange auf, deren Abschnitte je nach Zylinder mit 2KS, 1KS, 3KS und 4KS bezeichnet ist.

Der erste Hochdruckzylinder 1 hat beispielsweise einen Kolbendurchmesser von 17,8 mm und einen Stangendurchmesser von 12,6 mm und damit eine Ringfläche von 124,16 mm2, der zweite Hochdruckzylinder 2 einen Kolbendurchmesser von 12,6 mm und einen Querschnitt von 124,69 mm2, der dritte Hochdruckzylinder SK3 hat einen Kolbendurchmesser von 21,8 mm und einen Stangendurchmesser von 17,8 mm und somit eine Ringfläche von 124,40,34 mm2. Der gesamte Querschnitt der drei Hochdruckzylinder I, 2/ 3 beträgt somit 373,25 mm2.

Der Kolbendurchmesser des Antriebszylinders 4 beträgt z.B. 70 mm, die Kolbenstange 4KS hat einen Durchmesser von 21,8 mm, die Ringfläche beträgt somit 2.996,30 mm2.

Daraus ergibt sich ein Flächenverhältnis zwischen dem Antriebszylinder 4 und den angetriebenen Hochdruckzylindern I, 2, 3, von 8,0.

Im Antriebszylinder 4 ist somit ein Druck von etwa 250 bar zu erzeugen, um in den drei Hochdruckzylindern I, 2, 3 jeweils einen Hochdruck von 2.000 bar erreichen zu können.

Die ein- oder mehrteilige gemeinsame Kolbenstange der vier Zylinder ist stufenförmig, d.h. mit zunehmenden Durchmessern vom Zylinder 2 über den Zylinder 1 zum Zylinder 3 zum Zylinder 4 ausgebildet. Sie dient vorzugsweise, wie dargestellt, bei den kleinen Hochdruckzylindern 2 und 1 gleichzeitig als Kolben der Hochdruckzylinder 1 und 2, während bei den größeren Zylindern die Kolbenstange 3KS einen zusätzlichen Kolben 3K und beim Antriebszylinder die Kolbenstange 4KS einen zusätzlichen Kolben 4K trägt. Die Kolbenstange ist in den einzelnen Zylindern jeweils in Buchsen B mit Dichtungen geführt.

Sämtliche Zylinder I, 2, 3, 4 sind bevorzugt als Bohrungen in einem gemeinsamen Gehäuseblock ausgebildet.

Der Antriebszylinder 4 ist über Hydraulikleitungen 5, 6 mit einem hydraulischen Antriebsaggregat 7 verbunden, und zwar unter Zwischenschaltung eines Regelventiles 8 und eines Servoventiles 9, wie auf Zeichnung 1 dargestellt. Das Antriebsaggregat 7 bzw. die Hydraulikpumpe ist vorzugsweise über einen nicht dargestellten Riementrieb mit der Kurbelwelle des mit der Vorrichtung auszustattenden Fahrzeuges verbunden.

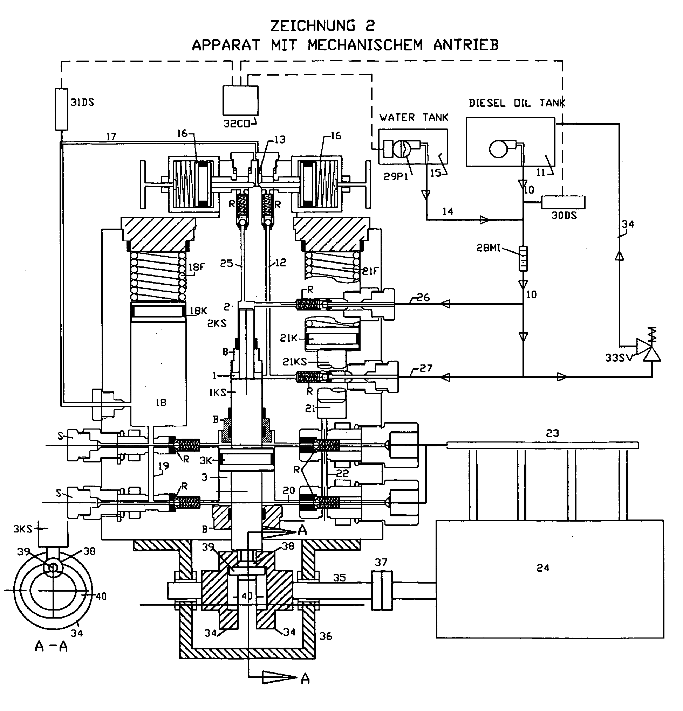

Alternativ zum hydraulischen Antriebszylinder 4 mit dem hydraulischen Antriebsaggregat 7 kann der Stufenkolben 1,2,3 wie auf Zeichnung 2 dargestellt, durch ein Nockengetriebe gehoben und gesenkt werden. Das Nockengetriebe 36 ist mit einer Kupplung 37 direkt oder mittels eines stufenlos verstellbaren Riemenantrieb, (hier nicht dargestellt) mit der Kurbelwelle des Kraftfahrzeuges oder mit einem elektrischen Motor verbunden

Zum Heben und Senken des Stufenkolbens ist dieser an der Antriebsseite mit einer Gabel ausgestattet 38 in der eine Rolle 39 gelagert ist, die in den Führungsnuten 40 der zwei Nockenscheiben 34 zwangsgeführt wird.

Die Hubgeschwindigkeit des Stufenkolbens wird durch Verstellung des Stufengetriebes erreicht. Die Verstellung des Stufengetriebes erfolgt hydraulisch durch Betätigung des Gaspedals des Kraftfahrzeuges.

Die Anschlüsse der Hochdruckzylinder 1, 2, 3 sind folgendermaßen ausgebildet:

Die Eingänge der beiden Hochdruckzylinders 1 und 2 sind über die Leitungen 26 und 27 und jeweils mit einem Rückschlagventil mit dem statischen Mischer (28MI) für die Rohemulsions-Herstellung verbunden. Die Ausgänge der beiden Hochdruckzylinder 1 und 2 für die Hochdruckförderung der Rohemulsion sind über die Hochdruckleitungen 12 und 25 und jeweils mit weiteren Rückschlagventilen R mit dem Homogenisierventil 13 verbunden.

Über die Leitung 10 ist der Dieselöltank (11) mit dem statischen Mischer (28MI) verbunden. Das Wasser zur Herstellung der Rohemulsion wird mit der Dosierpumpe (29PI) vom Wassertank 15 über die Leitung 14 vor dem statischen Mischer in die Leitung 10 dosiert. Die Dosierpumpe 29PI ist regelbar und dosiert die Wassermenge in Abhängigkeit der gemessenen Dichte des Dieselöls und des vorgegebenen Mischungsverhältnisses. Durch Rückführung der Emulsionen in den Dieselöltank zum Beispiel beim Entlasten des Sicherheitsventils 33SV oder bei der Rückführung der überschüssigen Mikro-Emulsion aus dem Motorbereich, wird sich der Wasseranteil im Dieselöl erhöhen und dessen Dichte verändern. Als Konsequenz hieraus muss die Dichte des Dieselöls, dass aus dem Tank entnommen wird, kontinuierlich gemessen werden um die Zugabe des Wassers zur Herstellung der Rohemulsion anzupassen.

Die Regelung der Dosierpumpe 29PI erfolgt über den Regler-32CO, der zum einen Messwerte vom Dichte-Sensor 30DS in der Dieselölzulaufleitung 10 und zum anderen Messwerte vom Dichte-Sensor 31DS in der Mikro-Emulsionsleitung 17 hinter dem Homogenisierventil und zusätzlich Signale von der Motorsteuerung erhält und diese im Kaskade-Regelungsverfahren verarbeitet.

Bei einem etwaigen Druckanstieg in den Rohemulsionsleitungen 26 und 27 durch Reduzierung der Abnahme wird das Sicherheitsventil 33SV in der Leitung 10 geöffnet und überschüssige Rohemulsion wird über die Leitung 34 zurück in den Dieselöl-Tank 11 geleitet.

Das Homogenisierventil 13 ist als Gegenstromventil ausgebildet, in dem die beiden unter hohem Druck von ca. 2.000 bar stehenden, aus den beiden Hochdruckzylindern 1 bzw. 2 geförderten Rohemulsionen im Gegenstrom vermischt und homogenisiert werden. Jede Ventilseite des Homogenisierventils 13 weist eine Spindel mit einem konischen Ventilkegel auf, die beide in einem mittigen zylindrischen Sitz mit scharfer Kante eingeführt sind. Die Spindelverstellung erfolgt über hydraulische Steuerzylinder 16. Der Sitz ist in einem Block eingeschrumpft. Die Spindeln sind in Offenen Kanälen geführt, die mit den hydraulischen Steuerzylindern 16 verbunden sind. Die Kolben der hydraulischen Zylinder 16 sind mit den Spindeln des Ventils verbunden und drücken mit Federn die Spindel mit dem Kegel in die zylindrische Bohrung des Sitzes. Der vom Druckverstärker aufgebaute Druck presst gegen die Unterseite des Kolbens, der gegen die vorgespannte Feder drückt. Dabei wird der Kegel vorn Ventilsitz um so viel gehoben, um stets mit gleichem Druck unabhängig vorn Massenstrom zu homogenisieren. Über den engen Spalt zwischen dem Ventilkegel und der Kante des Sitzes treffen die beiden Flüssigkeitsströme aus Dieselöl und Wasser mit Überschall-Geschwindigkeiten aufeinander. Der Druck wird dabei von etwa 2.000 bar auf 100 bar rapide abgebaut und die durch Aufprall, Scherung und Kavitation reduzierten Flüssigkeitströpfchen vermischen sich bei hoher Turbulenz und bilden eine Mikroemulsion.

Diese Mikroemulsion wird über eine Hochdruckleitung 17 einen Pufferspeicher 18 zugeführt. Dieser Pufferspeicher 18 ist als Zylinder ausgebildet, in der ein von einer Spannfeder 18F beaufschlagter Kolben 18K geführt ist. Der Ausgang des Pufferspeichers 18 ist über zwei Hochdruckkanäle 19 und jeweils ein Rückschlagventil R beiderseits des doppelt wirkenden Kolbens 3K mit dem Hochdruckzylinder 3 verbunden. Stopfen in den die Rückschlagventile R aufnehmenden Bohrungen sind mit S bezeichnet.

Der Ausgang des Hochdruckzylinders 3 ist über zwei Hochdruckleitungen 20 mit Rückschlagventil R sowie eine Hochdruckleitung 22 mit einem weiteren Pufferspeicher 21 verbunden und an einen Hochdruckverteiler 23 angeschlossen, der an einen Dieselmotor 24 des Fahrzeuges anzuschließen ist.

Der Pufferspeicher 21 ist in gleicher Weise aufgebaut, wie der Pufferspeicher 18. Er ist als Zylinder ausgebildet, in dem ein Kolben 21K von einer Spannfeder 21F belastet geführt ist.

Alle drei Hochdruckzylinder 1, 2, 3 und die Pufferspeicher 18, 21 sind vorzugsweise als nicht durchgehende Bohrungen

gemeinsam in einem Gehäuseblock angeordnet. Die Kolbenabdichtungen in den Hochdruckzylindern 1, 2, 3 werden vorzugsweise mit Spezialfeder gespannten Dichtungen aus Kunststoff oder mit Dichtungen aus Metall vorgenommen. Die Dichtungen werden mit Druckschrauben in Position gehalten.

Die am Ein- und Austritt eines jeden Hochdruckzylinders 1, 2, 3 vorgesehenen Rückschlagventile R dienen dazu dass beim Hochdruck die angesaugte Flüssigkeit nicht zurück in die Eintrittskanäle fließen kann und dass beim Saughub die auf Hochdruck gepumpte Flüssigkeit nicht zurück in die Zylinder zurückströmen kann.

Aus dem Dieseltank 11 und dem Wassertank 15 wird Dieselöl bzw. Wasser im statischen Mischer zu einer Rohemulsion vermischt und den Hochdruckzylindern 1 bzw. 2 zugeführt. Beim Saughub fließen die beiden Medien in die Zylinderräume und werden beim Druckhub über die Hochdruckleitungen 12 bzw. 25 zum Homogenisierventil 13 gefördert. Über den engen Spalt zwischen dem Ventilkegel und der Kante des Sitzes des Ventils fließen die beiden Flüssigkeiten mit hohen Geschwindigkeiten gegeneinander. Der Druck wird von 2.000 bar auf etwa 100 bar rapide abgebaut und die durch Scherung und Kavitation reduzierten Flüssigkeitströpfchen vermischen sich bei hoher Turbulenz.

Nach dem Verlassen des Homogenisierventils 13 fließt die gebildete Dieselöl-Wasser-Mikroemulsion über die Hochdruckleitung 17 zum Pufferspeicher 18, in dem die Emulsion mit einem Druck von 10 bar vorgehalten wird. Der Pufferspeicher 18 ist über die Hochdruckleitungen 19 mit dem dritten Hochdruckzylinder 3 verbunden. Der Kolben 3K des Hochdruckzylinders bzw. Einspritzzylinders 3 arbeitet dadurch doppelt wirkend, dabei wechselt das Saugen und Drücken jeweils von einer Seite zur anderen des Zylinders. Die geförderte Menge an Emulsion bei der Auf- und Abwärtsbewegung des Kolbens 3K entspricht der Menge, die vom Homogenisierventil 13 zum Pufferspeicher 18 gefördert wird. Beim Saughub wird die Emulsion aus dem Pufferspeicher 18 mit einem Druck von 10 bar in den dritten Hochdruckzylinder 3 gedrückt. Im Hochdruckkanal 19 verhindern die Rückschlagventile R, dass beim Druckhub die Emulsion mit hohem Druck in den Pufferspeicher 18 zurückströmt. Eine nicht näher bezeichnete Berstscheibe, mit Austritt nach außen in der Hochdruckleitung.17 angeordnet, soll bei Versagen des Rückschlagventils R den Pufferspeicher 18 bei einer Drucküberschreitung schützen.

Bei den Druckhüben fließt die Emulsion aus dem dritten Hochdruckzylinder 3 durch die Hochdruckleitungen 20 mit einem Druck von ca. 2.000 bar zum Dieselmotor 24. Der Pufferspeicher 21 ist ebenfalls über "die Leitung 22 an den Ausgang des Hochdruckzylinders 3 angeschlossen. Dieser Pufferspeicher 21 gleicht Druckschwankungen, die durch Schwankungen bei der Geschwindigkeit des Kraftfahrzeuges entstehen, aus.

In der Hochdruckleitung 20 sind zwischen dem Hochdruckzylinder 3 und dem Anschluss des Pufferspeichers 21 ebenfalls die Rückschlagventile R vorgesehen, welche einen Rückfluss vom Pufferspeicher 21 in den Hochdruckzylinder 3 verhindern.

Natürlich ist die Erfindung nicht auf das dargestellte Ausführungsbeispie beschränkt. Weitere Ausgestaltungen sind möglich, ohne den Grundgedanken zu verlassen. So kann, anders als bei der bevorzugten Ausgestaltung dargestellt, auch vorgesehen sein, dass die drei Hochdruckzylinder 1, 2, 3 nicht hintereinander, sondern parallel zueinander angeordnet sind oder alternativ zum Hydraulikantrieb, der aus dem beschriebenen Antriebszylinder mit Antriebskolben und dem Hydraulikaggregat besteht, kann als ebenso bevorzugter Antrieb der Stufenkolben durch ein Nockengetriebe angetrieben werden. Das Nockengetriebe wird über einen stufenlos verstellbaren Riemenantrieb, (hier nicht dargestellt) von der Kurbelwelle des Kraftfahrzeuges oder durch einen elektrischen Motor angetrieben.

Die Hubgeschwindigkeit des Stufenkolbens wird durch Verstellung des Stufengetriebes erreicht. Die Verstellung des Stufengetriebes erfolgt hydraulisch durch Betätigung des Gaspedals des Kraftfahrzeuges.

## Patentansprüche

1. Vorrichtung zur Herstellung einer Dieselöl-Wasser-Mikroemulsion und zur Einspritzung dieser Emulsion in einen Dieselmotor,
**Gekennzeichnet durch**
drei Hochdruckzylinder (1,2,3), wobei die Eingänge der ersten zwei Hochdruckzylinder (1, 2) mit einem statischen Roh-Emulsions-Vormischer (28MI) und die Ausgänge der ersten zwei Hochdruckzylinder (1, 2) mit einem Homogenisierventil (13), der Eingang des dritten Hochdruckzylinders (3) mit dem Ausgang des Homogenisierventils (13) und der Ausgang des dritten Hochdruckzylinders (3) mit dem Dieselmotor (24) verbunden ist, wobei die drei Kolben der drei Hochdruckzylinder (1, 2, 3) Bestandteil eines Druckübersetzers sind, dessen Antriebskolben (4K) in einem mit einem hydraulischen Antriebsaggregat (7) verbundenen Antriebszylinder (4) geführt ist.

2. Vorrichtung nach Anspruch 1, **dadurch gekennzeichnet,**
**Dass** die drei Hochdruckzylinder hintereinander angeordnet sind und zusammen mit dem Antriebszylinder (4) eine gemeinsame ein- oder mehrteilige Kolbenstange (4KS,3KS,1KS,2KS) aufweisen.

3. Vorrichtung nach Anspruch 1{ **dadurch gekennzeichnet** {
**Dass** die drei Hochdruckzylinder (1{2,3) parallel nebeneinander angeordnet sind.

4. Vorrichtung nach Anspruch 1, 2 oder 3,
**dadurch gekennzeichnet, das** der Querschnitt des Antriebskolbens (4K) wesentlich größer als die Summe der Querschnitte der Kolben der drei
Hochdruckzylinder (1,2,3) ist.

5. Vorrichtung nach einem der Ansprüche 1 bis 4,
**dadurch gekennzeichnet, dass** zwischen dem Ausgang des Homogenisierventils (13) und dem Eingang des dritten Hochdruckzylinders (3) ein erster Pufferspeicher (18) angeordnet ist.

6. Vorrichtung nach Anspruch 5,**dadurch gekennzeichnet, dass** ein mit dem Ausgang des dritten Hochdruckzylinders (3) verbundener zweiter Pufferspeicher (21) vorgesehen ist.

7. Vorrichtung nach einem der Ansprüche 1 bis 6, **dadurch gekennzeichnet, dass** die Steuerung des Antriebskolbens (4K) über den Massenstrom des Hydrauliköls des hydraulischen Antriebsaggregates (7) zum Antriebszylinder (4) mittels eines Regelventils (8) durch das Gaspedal des Dieselmotors erfolgt.

8. Vorrichtung nach einem der Ansprüche 1 bis 7, **dadurch gekennzeichnet dass** das hydraulische Antriebsaggregat (7) ein Drehmomentübertragungselement zur Verbindung mit der Kurbelwelle eines Kraftfahrzeuges aufweist.

9. Vorrichtung nach einem der Ansprüche 1 bis 8, **dadurch gekennzeichnet, dass** das Homogenisierventil (13) als Gegenstromventil ausgebildet ist.

10. Vorrichtung nach einem der Ansprüche 1 bis 9, **dadurch gekennzeichnet, dass** die drei Hochdruckzylinder (1,2,3), der Antriebszylinder (4) und/oder die beiden Pufferspeicher (18,21) als Bohrungen in einem gemeinsamen Gehäuseblock ausgebildet sind.

11. Vorrichtung nach einem der Ansprüche 1 bis 10, **dadurch gekennzeichnet, dass** der statische Mischer (28MI) zur Herstellung einer Wasser/ Dieselöl-Rohemulsion in der Leitung (10) zwischen dem Dieselöltank und den Eingangsleitungen (26), (27) der beiden Hochdruckzylinder (1) und (2) eingebaut ist.

12. Vorrichtung nach einem der Ansprüche 1-12 **dadurch gekennzeichnet, dass** eine regelbare Dosierpumpe (29PI) in der Leitung (14) zwischen Wassertank und dem Anschluss an die Dieselöl-Leitung (10) eingebaut ist

13. Vorrichtung nach einem der Ansprüche 1-13 **dadurch gekennzeichnet, dass** eine Kaskaden-Regeleinrichtung bestehend aus dem Reglergerät (32CO) und dem Dichte-Sensor (30DS), eingebaut in der Dieselöl-Leitung (10), sowie dem Dichte-Sensor (31DS) eingebaut in der Mikro-Emulsions-Leitung (17), sowie mit den Signalleitungen zwischen den Dichte-Sensoren (30DS) und (31DS) und dem Regelgerät (32CO) und der Signalleitung zwischen Regelgerät (32CO) und Dosierpumpe (29PI) zur Regelung der Dosierpumpe (29PI) und zur Einstellung des Wasser/Dieselölverhältnisses der Mikro-Emulsion eingebaut ist.

14. Vorrichtung nach einem der Ansprüche 1 **dadurch gekennzeichnet, dass** der Antrieb der Stufenkolben 1, 2 und 3 durch ein Nockengetriebe erfolgt, dass über ein Stufengetriebe eine Verbindung mit der Kurbelwelle eines Fahrzeuges oder einem elektrischen Motor aufweist.

## Claims

1. An apparatus for producing a diesel-oil/water microemulsion and for injecting said emulsion into a diesel engine,
**characterized by**
three high pressure cylinders (1, 2, 3), at which the inlets of the first two high pressure cylinders (1 < 2) being connected to a static raw emulsion premixer (28MI), and the outlets of the first two high pressure cylinders (1 < 2) being connected to a homogenizing valve (13), the inlet of the third high pressure cylinder (3) being connected to the outlet of the homogenizing valve (13) and the outlet of the third high pressure cylinder (3) being connected to the diesel engine (24), the three pistons of the three high pressure cylinders (1, 2, 3) being constituent parts of a pressure booster whose drive piston (4K) is guided in a drive cylinder (4) which is connected to a hydraulic drive unit (7).

2. The apparatus as claimed in claim 1,
**characterized**
**in that** the three high pressure cylinders are arranged in series and share a common single-part or multi-part piston rod (4KS, 3KS, 1 KS, 2KS) with the drive cylinder (4).

3. The apparatus as claimed in claim 1,
**characterized**
**in that** the three high pressure cylinders (1, 2, 3) are arranged adjacent to one another in parallel.

4. The apparatus as claimed in claim 1, 2 or 3, **characterized**
**in that** the cross section of the drive piston (4K) is significantly larger than the sum of the cross sections of the pistons of the three high pressure cylinders (1,2,3).

5. The apparatus as claimed in one of claims 1 to 4,
**characterized**
**in that** a first buffer store (18) is arranged between the outlet of the homogenizing valve (13) and the inlet of the third high pressure cylinder (3).

6. The apparatus as claimed in claim 5,
**characterized**
**in that** a second buffer store (21) which is connected to the outlet of the third high pressure cylinder (3) is provided.

7. The apparatus as claimed in one of claims 1 to 6,
**characterized**
**in that** the control of the drive piston (4K) is effected by means of the mass flow of the hydraulic oil of the hydraulic drive unit (7) to the drive cylinder (4) by means of a regulating valve (8) by means of the accelerator pedal of the diesel engine.

8. The apparatus as claimed in one of Claims 1 to 7,
**characterized**
**in that** the hydraulic drive unit (7) has a torque transmitting element for providing a connection to the crankshaft of a motor vehicle.

9. The apparatus as claimed in one of claims 1 to 8,
**characterized**
**in that** the homogenizing valve (13) is embodied as a counterflow valve.

10. The apparatus as claimed in one of claims 1 to 9,
**characterized in that** the three high pressure cylinders (1, 2, 3), the drive cylinder (4) and/or the two buffer stores (18, 21) are embodied as bores in a common housing block.

11. The apparatus as claimed in one of claims 1 to 10,
**characterized in that** the static mixer (28MI) for producing a water/diesel-oil raw emulsion is installed in the line (10) between the diesel oil tank and the inlet lines (26, 27) of the two high pressure cylinders (1) and (2).

12. The apparatus as claimed in one of claims 1 to 12,
**characterized in that** a controllable metering pump (29PI) is installed in the line (14) between the water tank and the connection to the diesel oil line (10).

13. The apparatus as claimed in one of claims 1 to 13,
**characterized in that** a cascaded control device, which comprises the control unit (32CO) and the density sensor (30DS) installed in the diesel oil line (10) and the density sensor (31 DS) installed in the microemulsion line (17), is installed with the signal lines between the density sensors (30DS) and (32DS) and the control unit (32CO) and the signal line between the control unit (32CO) and the metering pump (29PI), for controlling the metering pump (29PI) and for adjusting the water/diesel-oil ratio of the microemulsion.

14. The apparatus as claimed in 1
**characterized in that** the drive of of the stepped piston 1, 2 and 3 is carried out by a cam gear connected by means of a variable speed drive to the crank shaft of a vehicle or to an electrical motor.

## Revendications

1. Dispositif destiné à la production d'une micro-émulsion eau/gazole et à l'injection de cette émulsion dans une moteur diesel, **caractérisé par** trois cylindres haute pression (1,2,3), les entrées des deux premiers cylindres haute pression (1 > 2) étant reliées à un malaxeur d'émulsion brute statique (28MI) et les sorties des deux premiers cylindres haute pression (1 > 2) étant reliées à une soupape d'homogénéisation (13), l'entrée du troisième cylindre haute pression (3) étant reliée à la sortie de la soupape d'homogénéisation (13) et la sortie du troisième cylindre haute pression (3) étant reliée au moteur diesel (24), les trois pistons des trois cylindres haute pression (1, 2, 3) faisant partie d'un intensificateur de pression dont le piston d'entraînement (4K) est amené dans un cylindre d'entraînement (4) relié à un mécanisme d'entraînement hydraulique (7).

2. Dispositif selon la revendication 1, **caractérisé par le fait que** les trois cylindres haute pression sont disposés l'un derrière l'autre et présentent, conjointement avec le cylindre d'entraînement (4), une tige de piston en une ou plusieurs parties (4KS, 3KS, 1KS, 2KS).

3. Dispositif selon la revendication 1, **caractérisé par le fait que** les trois cylindres haute pression (1,2,3) sont disposés parallèles entre eux.

4. Dispositif selon la revendication 1, 2 ou 3, **caractérisé par le fait que** la section du piston d'entraînement (4K) est sensiblement plus importante que la somme des sections des pistons des trois cylindres haute pression (1, 2, 3).

5. Dispositif selon l'une des revendications 1 à 4, **caractérisé par le fait qu'**un premier accumulateur tampon (18) est disposé entre la sortie de la soupape d'homogénéisation (13) et l'entrée du troisième cylindre haute pression (3).

6. Dispositif selon la revendication 5, **caractérisé par le fait qu'**un second accumulateur tampon (21) relié à la sortie du troisième cylindre haute pression (3) est prévu.

7. Dispositif selon l'une des revendications 1 à 6, **caractérisé par le fait que** la commande du piston d'entraînement (4K) s'effectue par l'intermédiaire du débit massique de l'huile hydraulique du mécanisme d'entraînement hydraulique (7) vers le cylindre d'entraînement (4) au moyen d'une soupape de régulation (8) par la pédale d'accélération du moteur diesel.

8. Dispositif selon l'une des revendications 1 à 7, **caractérisé par le fait que** le mécanisme d'entraînement hydraulique (7) présente un élément de transmission de couple pour la connexion au vilebrequin d'un véhicule automobile.

9. Dispositif selon l'une des revendications 1 à 8, **caractérisé par le fait que** la soupape d'homogénéisation (13) se présente sous la forme d'une soupape à contre-courant.

10. Dispositif selon l'une des revendications 1 à 9, **caractérisé par le fait que** les trois cylindres haute pression (1,2,3), le cylindre d'entraînement (4) et/ou les deux accumulateurs tampon (18,21) se présentent sous forme d'alésages dans un bloc carter commun.

11. Dispositif selon l'une des revendications 1 à 10, **caractérisé par le fait que** le mélangeur statique (28MI) est installé pour la production d'une émulsion brute eau/gazole dans la conduite (10) entre le réservoir de gazole et les conduites d'entrée (26), (27) des deux cylindres haute pression (1) et (2).

12. Dispositif selon l'une des revendications 1 à 12, **caractérisé par le fait qu'**une pompe de dosage réglable (29PI) est installée dans la conduite (14) entre le réservoir à eau et le raccordement à la conduite de gazole (10).

13. Dispositif selon l'une des revendications 1 à 13, **caractérisé par le fait que** un dispositif de réglage en cascade constitué d'un dispositif de réglage (32CO) et d'un capteur de densité (30DS), installés dans la conduite de gazole (10), ainsi que d'un capteur de densité (31DS) installé dans la conduite de micro-émulsion (17), ainsi que des lignes de signaux entre les capteurs de densité (30DS) et (31DS) et le dispositif de réglage (32CO) et la ligne de signaux entre le dispositif de réglage (32CO) et la pompe de dosage (29PI) est installé pour le réglage de la pompe de dosage 29PI et la régulation du rapport eau/gazole de la micro-émulsion.

14. Dispositif selon la revendication 1, **caractérisé par le fait que** l'entraînement des pistons différentiels 1, 2 et 3 se fait par un engrenage à cames qui présente, par un engrenage réducteur, un raccordement au vilebrequin d'un véhicule automobile ou d'un moteur électrique.
